# FASCICULE DE BREVET EUROPEEN

(11) **EP 1 341 690 B1**
(45) Date de publication et mention de la délivrance du brevet: **27.02.2008**
(21) Numéro de dépôt: 01998464.0
(22) Date de dépôt: 26.11.2001
(51) Int. Cl.: B60T 13/569, B60T 13/52, F16F 1/12

(54) **SERVOFREIN PNEUMATIQUE A VIBRATIONS REDUITES**
DRUCKLUFTBREMSKRAFTVERSTÄRKER MIT VERMINDERTEN SCHWINGUNGEN
COMPRESSED AIR BRAKE BOOSTER WITH REDUCED VIBRATIONS

(30) Priorité: 29.11.2000 FR 0015542
(43) Date de publication de la demande: 10.09.2003
(73) Titulaire: ROBERT BOSCH GMBH, 70442 Stuttgart (DE)
(72) Inventeur: VERBO, Ulysse, F-93600 Aulnay-sous-Bois (FR); KOENIG, Emmanuel, F-95670 Marly La Ville (FR); HADJALI, Juba, F-93150 Le Blanc Mesnil (FR)
(74) Mandataire: Hurwic, Aleksander Wiktor
(86) Numéro de dépôt international: PCT/FR2001/003720
(87) Numéro de publication internationale: WO 2002/043998

(56) Documents cités:
- EP-A- 0 574 650
- DE-A- 19 539 601
- US-A- 4 233 884
- US-A- 4 732 372
- US-A- 5 442 915

## Description

La présente invention a pour objet un servofrein pneumatique à vibrations réduites. L'invention a pour but de simplifier la fabrication de tels servofreins afin de limiter leurs coûts et surtout de rendre leur constitutions plus fiable. Le but de l'invention est d'éliminer des vibrations ou bruits d'attaque comme, par exemple, des bruits provoqués par un appui violent sur une pédale de frein d'un véhicule.

Un servofrein pneumatique comporte dans son principe une chambre avant à volume variable séparée d'une chambre arrière également à volume mariable par une cloison mobile forée par une membrane étanche et souple et par une plaque-jupe rigide. La jupe rigide entraîne un piston pneumatique prenant appui, par l'intermédiaire d'une tige de poussée, sur un piston primaire d'un maître cylindre d'un circuit hydraulique de freinage, typiquement un maître cylindre tandem. La chambre avant, placée du côté du maître cylindre, est reliée pneumatiquement à une source de vide. La chambre arrière, opposée à la chambre avant et placée du côté d'une pédale de frein, est reliée pneumatiquement, de manière contrôlée par une valve, à une source de fluide propulseur, typiquement de l'air sous pression atmosphérique. Au repos, c'est à dire lorsqu'un conducteur n'appuie pas sur la pédale de frein, les chambres avant et arrière sont connectées entre elles alors que la chambre arrière est isolée par rapport à la pression atmosphérique. Lors du freinage, on isole tout d'abord la chambre avant par rapport à la chambre arrière, puis on admet de l'air dans la chambre arrière. Cette admission d'air a pour effet de propulser la cloison et de mettre en oeuvre l'assistance de freinage pneumatique.

Il est par ailleurs connu des assistances de freinage hydraulique. Typiquement un moteur électrique est relié à une pompe hydraulique qui injecte un fluide sous pression dans le circuit hydraulique au moment où celui-ci est sollicité.

Lors d'un appui brusque, par exemple, dans le cas d'un freinage d'urgence sur une pédale de frein ou notamment lors de coups portés avec le pied sur la pédale de frein, il peut apparaître un bruit qui résonne dans le servofrein. Ce bruit gênant peut être révélateur de vibrations supportées par ce servofrein, vibrations qui elles-mêmes sont susceptibles de conduire à une fatigue mécanique d'organes du servofrein. Dans l'invention, pour remédier à la naissance de ce bruit et pour prévenir sa diffusion, on a herché à en analyser les caractéristiques et à en déterminer la provenance.

On a d'abord dû séparer le bruit de pédale proprement dit du bruit de résonance à supprimer. On a alors pu mesurer que ce bruit ennuyeux à supprimer se développerait à une fréquence de l'ordre de 128 Hz, plus ou moins 5 Hz, à un niveau de 50 à 60 dB au départ et à un niveau de 40 dB à la fin. Sa durée est de l'ordre de 1 à 2 secondes. A cette longue résonance, désagréable à l'oreille s'ajoute une sensation de vibration à l'endroit de la pédale de frein. Malgré des recherches longues, le problème de la provenance de ce bruit est resté insoluble. En effet, les chambres avant et arrière du servofrein constituent des caisses de résonance qui masquent pour l'analyse la provenance exacte des vibrations acoustiques qu'on veut réduire. Par ailleurs, le nombre important des pièces composant un servofrein et leurs liaisons mutuelles tendues ou contraintes forment autant de candidates à la création du bruit. On a ainsi constaté que ce bruit se produisait quel que soit le type de maître cylindre placé contre la chambre avant. Mais il n'a pas pu être déterminé par des mesures si le bruit était un bruit de composant seul ou un bruit de système (créé par l'interaction de plusieurs composants). Par ailleurs, ces recherches ont été compliquées par le fait que le bruit gênant ne se produisait pas pour tous les types de servofrein, et pour un type donné pas nécessairement à chaque fois.

La réduction du bruit par amortissement de sa transmission le long de son chemin de propagation, de façon qu'il ne soit plus audible dans l'habitacle du véhicule, est possible mais n'est pas une solution satisfaisante et est de plus coûteuse. Par ailleurs, dans l'impossibilité de déterminer la source du bruit, une autre idée a été d'amortir l'ensemble du servofrein c'est-à-dire l'ensemble de la caisse de résonance..Mais cette démarche n'est pas satisfaisante non plus. Il faut d'abord s'occuper de la source du bruit pour être réellement efficace.

Le document US 5 442 915 decrit un servomoteur conventionel.

Dans l'invention, on a découvert finalement que le bruit était dû à la libération d'énergie stockée dans un ressort de rappel en appui par une première extrémité sur une paroi fixe de la chambre avant, et en appui par une deuxième extrémité sur la cloison mobile. Ce ressort de rappel fait du bruit lorsqu'il repousse la cloison mobile. Le bruit apparaît alors lorsque, en pratique le coup de pied est porté, et non pas au moment où le pied est relâché, bien que ces instants soient quasiment simultanés. Lors du freinage, il y a admission de l'air, donc déplacement de la cloison et le ressort de rappel est comprimé. Au cours d'une étape de freinage, le bruit résonnant apparaît seulement si le freinage est brusque.

Dans l'invention pour remédier au problème de ce bruit de résonance désagréable à l'oreille, gênant pour l'utilisateur, et peut être générateur de fragilité, on met alors le ressort de rappel en contact avec un amortisseur. L'amortisseur concerné peut être de deux types. Soit, il est un amortisseur par frottement, qui en pratique empêche le ressort de vibrer. Dans ce cas toutefois, l'efficacité de l'amortissement risque de s'amoindrir avec le temps, au fur et à mesure de l'usure de la partie en frottement de l'amortisseur. Soit d'une manière préférée, l'amortisseur comporte une pièce réactive, élastique, dont l'effet principal est de changer la fréquence d'oscillation propre du ressort au moins localement. De ce fait les mesures de fréquence sont mises à profit : le fait qu'elles révèlent une fréquence précise est synonyme de ce qu'un simple décalage en fréquence peut suffire pour filtrer la naissance du bruit. Dans ce cas, l'amortisseur peut même prendre la forme d'une partie élastique liant entre elles deux ou plusieurs spires du ressort, voire un surpoids placé sur une des spires, pour contrecarrer au moins localement le long du ressort la transmission de la vibration d'un bout du ressort à l'autre (provoquer localement une fréquence de résonance différente), et donc pour empêcher la naissance du bruit.

De préférence, les deux effets sont recherchés, et l'amortisseur peut alors prendre la forme d'une gaine élastique et de frottement, de forme cylindrique si le ressort est de forme cylindrique. Elle peut être aussi de forme conique si le ressort est de forme conique. Dans cet exemple préféré, l'amortisseur réalise un recouvrement externe du ressort. Le fait de recouvrir quelques spires grâce à l'amortisseur entraîne une suppression du bruit. De plus, au moment de la compression, en cas de gonflement, le ressort est toujours porté au contact de la gaine, malgré une usure éventuelle, et le bruit est toujours étouffé.

L'invention concerne donc un servofrein pneumatique, comportant une chambre avant connectable à une source de vide, une chambre arrière connectable à une arrivée haute pression, une cloison mobile jouant le rôle d'interface entre les deux chambres, un équipage mobile emporté avec la cloison mobile, un dispositif pour admettre un fluide haute pression dans la chambre arrière au moment d'un freinage, un ressort de rappel en appui grâce à une première extrémité sur une paroi fixe de la chambre avant, ce ressort étant en appui grâce à une deuxième extrémité sur la cloison mobile caractérisé en ce que le ressort est en contact d'amortissement avec un amortisseur.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'une demi-vue en coupe d'un servofrein pneumatique dans lequel est mise en oeuvre l'invention ;
- Figure 2 : une représentation en trois dimensions de l'installation de cavaliers selon l'invention.

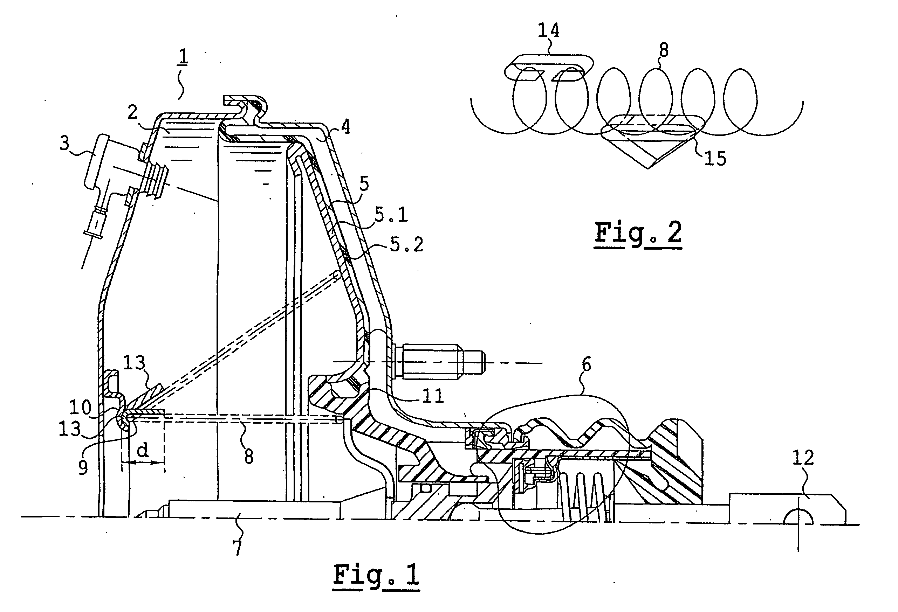

La Figure 1 montre un servofrein 1 comportant une chambre avant 2 connecté à une source de vide par une prise 3. La chambre avant 2 est séparée d'une chambre arrière 4 par une cloison mobile 5. La chambre arrière 4 peut admettre un fluide tel que de l'air grâce à un dispositif 6. Un équipage mobile 7 est emporté avec la cloison 5. Cet équipage 7 est destiné à actionner un circuit hydraulique de freinage.

Un ressort de rappel 8 est en appui grâce à une première extrémité 9 sur une paroi fixe 10 de la chambre avant 4. Le ressort 8 est également en appui grâce à une deuxième extrémité 11 contre la cloison mobile 5. La cloison 5 est ici réalisée avec une plaque-jupe rigide 5.1 recouverte par une membrane étanche 5.2. Quand le ressort 8 est conique, l'extrémité 11 du ressort 8 porte contre la jupe 5.1. Quand le ressort 8 est droit, l'extrémité 11 porte contre une entretoise cylindrique solidaire de la jupe 5.1.

Un appui sur la pédale de frein 12 provoque une évolution du dispositif 6 et donc une admission de l'air dans la chambre 4. La chambre arrière 4 se remplit alors d'air, la cloison 5 se déplace et le ressort 8 se comprime.

Selon l'invention, le ressort 8 est en contact d'amortissement avec un amortisseur 13.

Selon une première réalisation, le ressort 8 est cylindrique. Dans ce cas l'amortisseur 13 est un cylindre. Dans une autre réalisation, le ressort 8 peut être de forme conique. Dans ce cas l'amortisseur 13 est un cône.

L'amortisseur 13 est un amortisseur de recouvrement. Le recouvrement du ressort 8, ainsi réalisé, est de préférence un recouvrement externe. Dans ces conditions, au moment de la compression du ressort 8, que ce ressort 8 gonfle et ou flambe, le contact du ressort avec l'amortisseur 13 en recouvrement a lieu. Si un recouvrement interne était réalisé, le recouvrement pourrait ne pas avoir lieu dans le cas d'un gonflement du ressort 8 au moment de la compression. Avec un recouvrement externe, il est par ailleurs possible de prévoir un diamètre intérieur de l'amortisseur 13 légèrement inférieur au diamètre extérieur du ressort 8 de façon à ce qu'un contact permanent soit établi. Dans la solution préférée, l'amortissement réalisé par l'amortisseur 13 est un amortissement par frottement avec aussi une extension élastique.

L'amortisseur 13 quelle que soit sa forme est de préférence fixé à la paroi fixe 10 de la chambre avant 2 ou à la jupe 5.1. La fixation à la face interne de la paroi avant de la chambre avant 2 est préférée car elle est plus simple. De préférence, pour cette fixation l'amortisseur 13 se présentera sous la forme d'une gaine munie à son extrémité de fixation d'un bourrelet recourbé vers l'intérieur. La fixation de la gaine se réalise facilement en glissant ce bourrelet recourbé entre l'extrémité 9 du ressort 8 et la paroi de la chambre avant 2 contre laquelle porte cette extrémité 9.

La matière de l'amortisseur 13 est de préférence du caoutchouc. Il serait aussi envisageable de réaliser un recouvrement en mousse (par exemple avec un bouchon de mousse placé dans le ressort). Mais une telle réalisation supposerait que la mousse soit capable de supporter toutes les variations de volume. De plus elle pourrait impliquer des problèmes de débit d'écoulement d'air.

Quand l'amortisseur 13 est une gaine, celle-ci a de préférence une longueur inférieure au tiers de la longueur totale du ressort 8 dans sa position maintenue dans la chambre avant, lorsque la cloison 6 est repoussée vers la chambre arrière. Pour déterminer la longueur du recouvrement, différentes expériences ont été établies. Ainsi on a expérimenté différentes longueurs de recouvrement. Ces différentes longueurs étaient égales à 26 mm, 20 mm et 13 mm.. Une fois les tests effectués, on a découvert que la meilleure solution était un recouvrement de 20 mm, correspondant sensiblement au tiers. Avec cette longueur, la gaine enveloppe suffisamment le ressort 8, tout en autorisant un déplacement sans gène sur une course maximum de la cloison 5. L'amortisseur 13 ayant une longueur inférieure au tiers de la longueur totale du ressort, le ressort peut disposer des deux tiers de sa longueur pour effectuer sa course. La course totale n'a lieu que dans le cas d'une purge. Dans les autres cas, le ressort n'a jamais une course totale sur toute sa longueur. Il n'y a donc normalement pas de contact entre la cloison 5 et le cylindre de recouvrement 13.

La longueur au deux tiers qui a été déterminée est une longueur suffisante pour supprimer le bruit tout en étant une longueur pas trop grande pour éviter des problèmes d'endurance et des problèmes de tenue du servofrein en entier. Le servofrein doit en effet servir pour environ un million d'applications avec un déplacement aux deux tiers de la course. Selon l'invention, on évite donc les interférences pendant les deux tiers de la course.

Avec le perfectionnement de l'invention, le bruit de résonance n'a plus alors une durée de 1 à 2 secondes mais a une durée inférieure à 300 millisecondes. Il devient inaudible depuis l'intérieur de l'habitacle.

Il serait envisageable également, pour étouffeur le bruit gênant, de maintenir plusieurs spires entre elles, par exemple grâce à un anneau élastique. La figure 2 montre schématiquement comment un ou des anneaux en un matériau élastique rapprocheraient entre elles deux ou plus de deux spires du ressort 8. On pourrait ainsi prévoir un recouvrement 14 de deux spires ou un recouvrement 15 de trois spires ou plus suivant le besoin. Les amortisseurs 14 et 15 pourraient être de simples cavaliers, éventuellement inextensibles, voire rigides, qui imposeraient par leur présence un décalage de la fréquence de résonance à une valeur où la vibration ne pourrait pas être entretenue. De préférence, pour que les cavaliers soient efficaces lorsque le ressort se comprime, les cavaliers doivent être tendus lorsque le ressort est au repos. Les cavaliers possèdent ainsi une forme pliée par le milieu, en V inversé, l'ouverture du V étant plus faible que l'écart entre deux spires pour assurer la tension des cavaliers.

La solution apportée par l'invention, notamment la solution préférée avec une gaine, présente l'avantage de ne pas remettre en cause le fonctionnement de l'appareil.

## Revendications

1. - Servofrein (1) pneumatique, comportant une chambre avant (2) connectable (3) à une source de vide, une chambre arrière (4) connectable à une arrivée haute pression, une cloison mobile (5) jouant le rôle d'interface entre les deux chambres, un équipage mobile (7) emporté avec la cloison mobile, un dispositif (6) pour admettre un fluide haute pression dans la chambre arrière au moment d'un freinage, un ressort de rappel (8) en appui sur une première extrémité (9) sur une paroi fixe (10) de la chambre avant, ce ressort étant en appui sur une deuxième extrémité (11) sur la cloison mobile **caractérisé en ce que** le ressort est en contact d'amortissement avec un amortisseur (13).

2. - Servofrein selon la revendication 1, **caractérisé en ce que** l'amortisseur est un cylindre ou un cône.

3. - Servofrein selon l'une des revendications 1 à 2, **caractérisé en ce que** l'amortisseur est un amortisseur de recouvrement.

4. - Servofrein selon l'une des revendications 1 à 3, **caractérisé en ce que** l'amortisseur est fixé à la paroi fixe de la chambre avant.

5. - Servofrein selon la revendication 4, **caractérisé en ce que** l'amortisseur comporte une gaine munie d'un bourrelet, le bourrelet étant inséré entre une extrémité du ressort et une face interne de la paroi avant de la chambre avant.

6. - Servofrein selon l'une des revendications 1 à 5, **caractérisé en ce que** l'amortisseur réalise un recouvrement externe.

7. - Servofrein selon l'une des revendications 1 à 6, **caractérisé en ce que** l'amortisseur est en caoutchouc.

8. - Servofrein selon l'une des revendications 1 à 7, **caractérisé en ce que** l'amortisseur a une longueur inférieure au tiers de la longueur du ressort entre les deux chambres lorsque le servofrein est au repos.

9. - Servofrein selon l'une des revendications 1 à 8, **caractérisé en ce que** l'amortisseur est un cavalier rapprochant au moins deux spires entre elles.

## Claims

1. Pneumatic brake booster (1) comprising a front chamber (2) that can be connected (3) to a source of vacuum, a rear chamber (4) that can be connected to a high-pressure inlet, a moving partition (5) acting as interface between the two chambers, moving gear (7) carried along with the moving partition, a device (6) for letting a high-pressure fluid into the rear chamber at the time of braking, a return spring (8) bearing against a first end (9) on a fixed wall (10) of the front chamber, this spring bearing on a second end (11) on the moving partition, **characterized in that** the spring is in damping contact with a damper (13).

2. Brake booster according to Claim 1, **characterized in that** the damper is a cylinder or a cone.

3. Brake booster according to one of Claims 1 and 2, **characterized in that** the damper is a covering damper.

4. Brake booster according to one of Claims 1 to 3, **characterized in that** the damper is fixed to the fixed wall of the front chamber.

5. Brake booster according to Claim 4, **characterized in that** the damper comprises a sheath equipped with a lip, the lip being inserted between one end of the spring and an interior face of the front wall of the front chamber.

6. Brake booster according to one of Claims 1 to 5, **characterized in that** the damper covers on the outside.

7. Brake booster according to one of Claims 1 to 6, **characterized in that** the damper is made of rubber.

8. Brake booster according to one of Claims 1 to 7, **characterized in that** the damper has a length less than one third of the length of the spring between the two chambers when the brake booster is at rest.

9. Brake booster according to one of Claims 1 to 8, **characterized in that** the damper is a rider pulling at least two turns closer together.

## Patentansprüche

1. Pneumatische Servobremse (1) mit einer vorderen Kammer (2), die an eine Vakuumquelle angeschlossen werden kann (3), einer hinteren Kammer (4), die an eine Hochdruckzuführung angeschlossen werden kann, einer beweglichen Trennwand (5), die die Funktion einer Trennfläche zwischen den beiden Kammern hat, einer beweglichen Gruppe (7), die mit der beweglichen Trennwand mitgenommen wird, einer Vorrichtung (6), um bei einer Bremsung das Einströmen eines Hochdruckfluids in die hintere Kammer zu gestatten, und einer Rückstellfeder (8), die an einem ersten Ende (9) an einer feststehenden Wand (10) der vorderen Kammer anliegt, wobei diese Feder an einem zweiten Ende (11) an der beweglichen Trennwand anliegt, **dadurch gekennzeichnet, dass** die Feder mit einem Dämpfer (13) in Dämpfungskontakt ist.

2. Servobremse nach Anspruch 1, **dadurch gekennzeichnet, dass** der Dämpfer ein Zylinder oder ein Kegel ist.

3. Servobremse nach Anspruch 1 oder 2, **dadurch gekennzeichnet, dass** der Dämpfer ein Abdeckungsdämpfer ist.

4. Servobremse nach einem der Ansprüche 1 bis 3, **dadurch gekennzeichnet, dass** der Dämpfer an der feststehenden Wand der vorderen Kammer befestigt ist.

5. Servobremse nach Anspruch 4, **dadurch gekennzeichnet, dass** der Dämpfer eine mit einem Wulst versehene Hülle aufweist, wobei der Wulst zwischen einem Ende der Feder und einer Innenfläche der vorderen Wand der vorderen Kammer eingesetzt ist.

6. Servobremse nach einem der Ansprüche 1 bis 5, **dadurch gekennzeichnet, dass** der Dämpfer eine äußere Abdeckung realisiert.

7. Servobremse nach einem der Ansprüche 1 bis 6, **dadurch gekennzeichnet, dass** der Dämpfer aus Kautschuk besteht.

8. Servobremse nach einem der Ansprüche 1 bis 7, **dadurch gekennzeichnet, dass** der Dämpfer eine Länge von weniger als einem Drittel der Länge der Feder zwischen den beiden Kammer hat, wenn sich die Servobremse in der Ruhestellung befindet.

9. Servobremse nach einem der Ansprüche 1 bis 8, **dadurch gekennzeichnet, dass** der Dämpfer eine Krampe ist, die mindestens zwei Windungen zusammenrückt.
